# FASCICULE DE BREVET EUROPEEN

(11) **EP 1 189 356 B1**
(45) Date de publication et mention de la délivrance du brevet: **02.07.2003**
(21) Numéro de dépôt: 01000421.6
(22) Date de dépôt: 05.09.2001
(51) Int. Cl.: H04B 1/40

(54) **Appareil communiquant multimode comportant un dispositif d'émission réception à plusieurs entrées**
Multimodales Kommunikationsgerät mit einem Sendeempfänger mit mehreren Eingängen
Apparatus for multimode communication containing a means for transmission/reception to plural inputs

(30) Priorité: 13.09.2000 FR 0011673
(43) Date de publication de la demande: 20.03.2002
(73) Titulaire: SAGEM S.A., 75015 Paris (FR)
(72) Inventeur: Romao, Fernando, 78360 Montesson (FR)
(74) Mandataire: Schmit, Christian Norbert Marie

(56) Documents cités:
- WO-A-94/11819
- GB-A- 2 312 108
- GB-A- 2 343 592

## Description

La présente invention a pour objet un appareil communiquant multimodes comportant un dispositif d'émission réception à plusieurs entrées. Le domaine de l'invention est celui des communications distantes utilisant au moins une connexion hertzienne. En particulier le domaine de l'invention est celui de la téléphonie mobile et plus précisément celui des téléphones multimodes. Par téléphone multimodes il faut comprendre un téléphone mobile qui est capable de mettre en oeuvre plusieurs normes de téléphonie mobile. Parmi ces normes de téléphonie mobile on peut citer la norme GSM, la norme PCS, la norme DCS, la norme UMTS, la liste n'est pas limitative.

Un but de l'invention est de réaliser un téléphone multimode comportant un étage d'émission réception ayant un nombre de composants réduit. Un autre but de l'invention est de réaliser un téléphone multimode comportant un étage d'émission réception ou comportant des composants simples et de conception maîtrisée. Un autre but de l'invention est de réduire le coût d'un téléphone multimode. Un autre but de l'invention est de réduire la consommation électrique d'un étage d'émission réception d'un téléphone multimode.

Dans l'état de la technique on connaît déjà des téléphones mobiles multimodes. Dans la pratique il s'agit de téléphones bimodes ou trimodes. Ces téléphones utilisent des normes de type GSM qui sont les normes GSM, DCS et PCS. Ces normes sont de type GSM, c'est-à-dire que dans ces normes les signaux produits et reçus ne coexistent pas temporellement. Autrement dit cela signifie que le téléphone peut soit travailler pour produire des signaux, soit travailler pour traiter des signaux reçus. De tels téléphones mobiles comportent une antenne qui est suivie d'un switch qui aiguille les signaux vers plusieurs chaînes de traitement. Un tel téléphone mobile comporte autant de chaînes de traitement en réception qu'il y a de normes gérées par le téléphone mobile. C'est-à-dire que pour un téléphone mobile pouvant fonctionner selon les normes GSM, PCS et DCS, l'appareil comportera trois chaînes de réception. De même l'appareil comportera autant de chaînes de production de signaux qu'il y a de normes pouvant être gérées par le téléphone mobile. Sachant que chaque chaîne comporte au moins un amplificateur et un filtre pour les chaînes de réception, cela fait un nombre important de composants. Cela se traduit par une consommation de courant excessive et donc une autonomie réduite pour un tel téléphone mobile. De plus ces composants prennent une place importante ce qui diminue le facteur d'intégration du téléphone.

Dans l'état de la technique on connait le document GB 2 343 592 présentant 2 chaînes de traitement indépendantes.

Pour diminuer le nombre de ces composants il est possible d'utiliser des amplificateurs large bande. Mais ces amplificateurs sont de conception très complexe et coûteuse. De plus leurs performances dans chacune des bandes utilisées ne sont pas équivalentes aux performances atteintes par plusieurs amplificateurs de bande moins large ayant chacun une fréquence de travail.

Dans l'état de la technique il existe d'autres normes de téléphonie mobile comme la norme UMTS pour laquelle les signaux reçus et produits sont multiplexés en fréquence. Cela signifie que la fréquence porteuse pour les signaux reçus et produits n'est pas la même et que ces signaux circulent en même temps. Dans l'état de la technique il existe des téléphones fonctionnant selon des normes de type GSM et des normes de types UMTS. De tels téléphones comportent deux antennes, une pour les signaux de type GSM, une pour les signaux de type UMTS. L'antenne pour les signaux de type GSM est suivie par un récepteur tel que celui décrit aux paragraphes précédents. L'antenne pour les signaux UMTS est suivi par un dispositif d'émission réception connu dans le domaine de l'UMTS. Les deux dispositifs d'émission réception, d'une part GSM et d'autre part UMTS, sont totalement disjoints. Ils comportent chacun leurs amplificateurs et leurs filtres. Un téléphone mobile fonctionnant selon des normes de type GSM et des normes de type UMTS, par exemple GSM, PCS, DCS et UMTS, voit donc le nombre de composants de son étage d'émission réception considérablement accru. Cela augmente dans la même proportion les inconvénients déjà cités à savoir l'encombrement, la consommation, et le coût.

L'invention résout ces problèmes en utilisant un dispositif d'émission réception comportant deux antennes. Une première antenne permet de recevoir des signaux de type GSM et une deuxième antenne permet de recevoir les signaux de type UMTS. La première antenne est connectée à un diplexer qui permet de séparer les signaux selon des normes GSM et des signaux selon les normes PCS/DCS. Les signaux selon la norme GSM seront traités par une chaîne de réception à impédance adaptée comportant un filtre sélecteur de bande à fonctionnant dans des bandes voisines de 900 MHtz, et un amplificateur faible bruit. Les signaux selon la norme PCS DCS seront traités par une chaîne de traitement qui est aussi celle qui traitera les signaux reçus selon une norme UMTS. Cette chaîne de traitement comporte un amplificateur et un filtre à sélecteur de bande. Les signaux selon la norme DCS et PCS sont dans des bandes aux alentours de 1800 et 1900 MHtz, les signaux selon la norme UMTS sont à 2,1 GHtz. Ainsi la bande de l'amplificateur s'étend environ de 1800 à 2100 MHtz. Il ne s'agit donc pas d'un amplificateur large bande comme ceux qui sont utilisés dans l'état de la technique et qui couvrent une bande de fréquence allant au moins de 900 MHtz à 1900 MHtz. Dans l'invention l'amplificateur est précédé par un filtre sélecteur qui permet de sélectionner les signaux qui seront traités par cette chaîne de réception.

La deuxième antenne est connectée à un duplexer qui permet de duplexer les signaux en émission et en réception selon la norme UMTS. Les signaux reçus sont dirigés vers le sélecteur précédemment cité.

Dans l'invention le diplexer permet aussi de diplexer des signaux produits selon la norme GSM et des signaux produits selon les normes DCS PCS. Les sorties des chaînes de production sont protégées par des diodes qui empêchent les signaux reçus de venir perturber le fonctionnement de ces chaînes de production.

L'invention réalise ainsi un étage d'émission réception multimode comportant un nombre réduit de composants. Notamment elle ne comporte que deux amplificateurs en réception. Ces amplificateurs sont de conception simple puisqu'ils ne sont pas large bande. Leur conception et leur implantation sont donc déjà parfaitement maîtrisées.

L'invention a donc pour objet un appareil comportant un dispositif d'émission réception de signaux radioélectriques fonctionnant selon plusieurs normes caractérisé en ce que le dispositif d'émission réception comporte :
- plusieurs entrées, chacune correspondant à certaines normes,
- une première chaîne de réception pour traiter des signaux reçus, via une première entrée, dans une gamme de fréquences correspondant à des signaux selon des premières normes,
- une deuxième chaîne de réception pour traiter des signaux reçus, via la première et une deuxième entrée, dans une gamme de fréquences correspondant à des signaux selon des deuxièmes normes,
- un sélecteur pour sélectionner, parmi des signaux reçus par les première et deuxième entrées, les signaux traités par la deuxième chaîne de réception.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une illustration de la mise en oeuvre de moyens pour la réalisation d'un dispositif d'émission réception selon l'invention.
Figure 2 : une illustration d'une variante de l'invention.

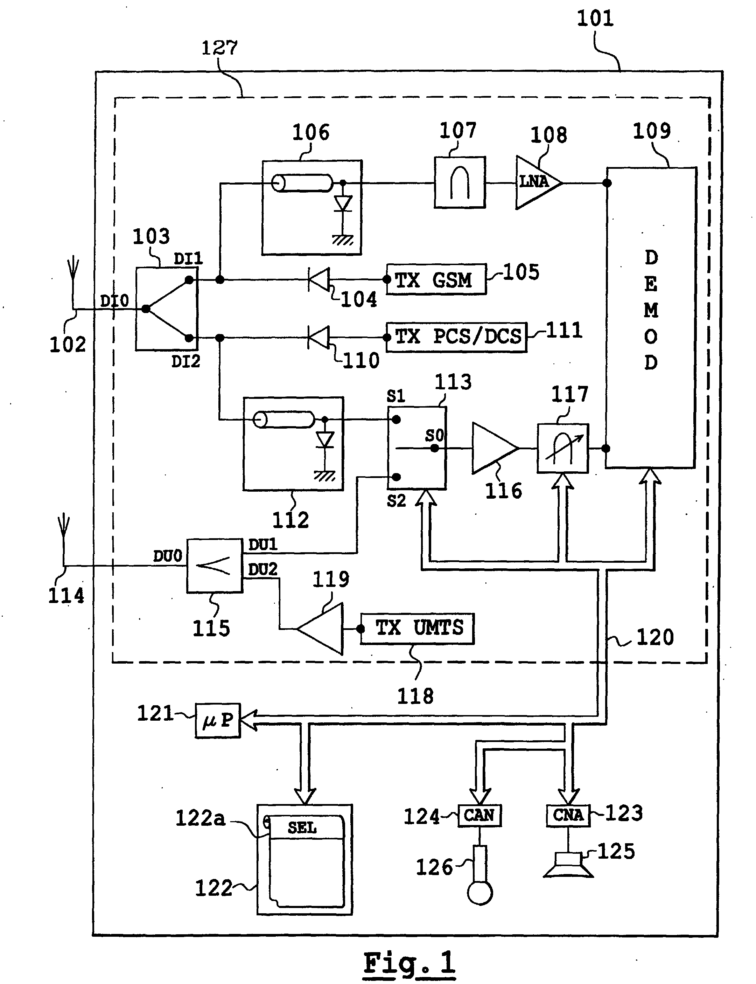

La figure 1 montre un appareil 101. Dans la description qui suit, on considérera que l'appareil 101 est un téléphone 101 mobile. Le téléphone 101 comporte un dispositif 127 d'émission réception de signaux radioélectrique. Le téléphone 101 comporte une première antenne 102. L'antenne 102 est connectée à un diplexer 103. Dans notre exemple il s'agit d'un diplexer à trois ports 3. Un premier port di0 est connecté à l'antenne 102. Le port di0 est une première entrée du dispositif d'émission réception du téléphone 101. Le diplexer 103 comporte deux autres portes di1 et di2. Le diplexer 103 reçoit sur son port di0 des signaux modulés selon des normes GSM, PCS ou DCS. Chacun de ces signaux a donc une fréquence porteuse définie. En fonction de la fréquence de cette porteuse les signaux sont aiguillés soit sur le port di1s'il s'agit de signaux GSM, soit sur le port di2 s'il s'agit de signaux PCS ou DCS. D'autre part le diplexer 103 reçoit sur son port di1 des signaux modulés selon la norme GSM, et sur son port di2 des signaux modulés selon la norme PCS DCS. Ces signaux sont dirigés vers le port di0 pour être diffusés par l'antenne 102. On parle de diplexer plutôt que de duplexer car les signaux reçus par le port di0 et les signaux reçus par les ports di1 et di2 ne circulent pas en même temps dans le diplexer. Dans la pratique on pourrait très bien mettre à la place du diplexer 103 un sélecteur qui permettrait de sélectionner quelle est la connexion active parmi les connexions di0- di1 et di0-di2. En effet un téléphone mobile multimodes ne fonctionne pas selon plusieurs modes en même temps.

Le port di1 est connecté d'une part à l'entrée d'une chaîne de traitement, d'autre part à la sortie d'une chaîne de production de signaux selon la norme GSM. Le port di1 est donc connecté à une diode 104. La diode 104 est d'autre part connectée à des circuits 105 de production de signaux selon la norme GSM. La diode 104 permet de laisser passer les signaux produits par les circuits 105 tout en évitant que les signaux issus du port di1 et reçus via l'antenne 102 ne perturbent le fonctionnement des circuits 105. La diode 104 protège donc les circuits 105 des signaux reçus par l'appareil 101 via son antenne 102. Le port di1 est d'autre part connecté à des éléments 106 d'adaptation d'impédance. Le rôle de ces éléments 106 est identique au rôle de la diode 104. Il s'agit d'un rôle de protection. Les éléments 106 permettent d'éviter que des signaux produits par les circuits 105 ne soient considérés par la chaîne de réception comme des signaux reçus via l'antenne 102. Les éléments d'adaptation 106 sont connectés d'autre part à une entrée d'un filtre sélecteur de bande 107. La sortie du filtre 107 est connectée à l'entrée d'un amplificateur 108 faible bruit. La sortie de l'amplificateur 108 est connectée à l'entrée d'un circuit 109 de démodulation. Le filtre 107 permet de sélectionner la bande de fréquence qui doit être retenue avant amplification. Cette bande est une bande GSM, donc située aux alentours de 900 MHz. L'amplificateur 108 est de ceux couramment utilisés dans la téléphonie selon la norme GSM. La conception de l'amplificateur 108 est donc maîtrisée, cela d'autant plus facilement qu'il ne travaille qu'à des fréquences correspondant à la norme GSM, c'est à dire dans une bande étroite.

La largeur de la bande sélectionnée dépend de la norme selon laquelle le téléphone 101 fonctionne. Cela est valable pour toutes les normes. Les normes définissent la largeur d'une bande qui peut être allouée pour l'établissement d'une communication, cela s'appelle aussi allouer un canal de communication.

L'amplificateur 108 permet d'amplifier les signaux reçus par l'antenne 102 qui sont souvent très très faibles car atténués lors de leur propagation entre la station de base qui les a émis et le téléphone 101 qui les reçoit. Les circuits 109 reçoivent des signaux modulés et produisent des signaux numériques correspondant après démodulation.

Le port di2 est connecté à la sortie d'une diode 110. L'entrée de la diode 110 est connectée à des circuits 111 de production de signaux selon la norme PCS ou DCS. Le rôle de la diode 110 est d'empêcher que des signaux reçus par l'antenne 102 et sortant par le port di2 ne viennent perturber le fonctionnement des circuits 111. Le port di2 est d'autre part connecté à des éléments 112 d'adaptation d'impédance. Le rôle des éléments 112 est d'éviter que les signaux produits par les circuits 111 ne perturbent le fonctionnement des éléments situés de l'autre côté des éléments 112. Autrement dit, les éléments 112 protègent la deuxième chaîne de réception des signaux produit par les circuits 111. Dans une variante, les éléments 106 et 112 peuvent être des filtres réjecteurs de bande dont la fréquence de réjection est variable en fonction de la fréquence porteuse des signaux produits respectivement par les circuits 105 et 111. Les éléments 112 sont d'autre part connectés à un port S1 d'un sélecteur 113.

Le sélecteur 113 peut établir une liaison entre plusieurs de ses ports. Le sélecteur 113 comporte trois ports. Le sélecteurs 113 peut établir une liaison entre ses ports S0 et S1, ou entre ses ports S0 et S2.

La figure 1 montre que le téléphone 101 comporte une deuxième antenne 114. Cette deuxième antenne 114 reçoit, ou diffuse, des signaux selon la norme UMTS. L'antenne 114 est connectée à un duplexer 115. Le duplexer 115 comporte trois ports. L'antenne est connectée sur un port du0 du duplexer 115. Le port du0 constitue une deuxième entrée du dispositif d'émission réception du téléphone 101. Les signaux reçus sur le port du0 sont dirigés vers un port du1 du duplexer 115. Par un troisième port du2, le duplexer 115 reçoit des signaux qui sont dirigés vers le port du0. Dans la pratique un duplexer peut être réalisé par deux lignes adaptées, chacune à une fréquence, connectées par une de leurs extrémités. Cette extrémité par laquelle sont connectées les deux lignes est connectée à l'antenne 114. En effet selon la norme UMTS des signaux émis et reçus ne le sont pas à la même fréquence porteuse. Il est donc possible de différencier ces signaux par la fréquence de leur porteuse. Le port du1 du duplexer 115 est connecté au port S2 du connecteur 113. Le port S0 du sélecteur 113 est connecté à une entrée d'un amplificateur 116. La sortie de l'amplificateur 116 est connectée à l'entrée d'un filtre 117. La sortie du filtre 117 est connectée au circuit 109 de démodulation. La chaîne de réception, constituée par l'amplificateur 116 et le filtre 117, traite donc des signaux selon les normes PCS, DCS et UMTS. L'amplificateur 116 a donc une bande passante qui s'étend de 1800 MHtz à 2,1 GHtz. La fréquence de sélection du filtre 117 peut être paramétrée afin de ne sélectionner qu'une bande de fréquence correspondant à un canal de réception dans l'une des normes PCS, DCS ou UMTS.

On constate donc que dans les deux chaînes de réception du dispositif d'émission réception du téléphone 101, les amplificateurs ont des bandes passantes restreintes et sont donc facilement réalisables, peut bruyants et d'une consommation modeste.

Le port du2 du sélecteur 116 est connecté à la sortie d'une chaîne de production de signaux selon la norme UMTS. Cette chaîne de production comporte des circuits 118 de production de signaux et un amplificateur 119 de puissance dont la sortie est connectée au port du2. Les signaux produits par les circuits 118 doivent être amplifiés afin d'être diffusés par l'antenne et d'être correctement reçus par la station de base à laquelle est connecté le téléphone 101.

La figure 1 montre que le téléphone 101 comporte un bus 120 permettant de commander notamment le sélecteur 113, le filtre 117 et les circuits 109. Dans la pratique le bus 120 permet aussi de commander les circuits 105, 111 et 118. Le raccordement de ces circuits au bus 120 n'a pas été dessiné pour ne pas surcharger le dessin. De même les circuits 105, 109, 111 et 118 ont été représentés par plusieurs blocs. Dans la pratique il peut s'agir d'un seul et même composant capable de gérer la modulation et la démodulation des différentes normes que gère le téléphone 101. Dans ce cas il s'agit d'un composant ayant plusieurs entrées et plusieurs sorties.

On rappelle qu'un bus est un ensemble de fils ou de pistes comportant ces éléments en nombre suffisant pour véhiculer les signaux de commandes, d'adresses, de données, d'interruptions, d'horloges et l'alimentation.

La figure 1 montre que le téléphone 101 comporte un microprocesseur 121, et une mémoire 122. La mémoire 122 comporte plusieurs zones, notamment une zone 122a comportant des codes instruction qui commandent le microprocesseur notamment lorsque celui-ci doit paramétrer le dispositif d'émission réception du téléphone 101. Lorsque le téléphone 101 fonctionne en mode GSM, le microprocesseur 121, commandé par les codes instruction de la zone 122a, commande le sélecteur 113 afin que celui-ci établisse une liaison entre les ports S0 et S1. Le microprocesseur 121 commande aussi le filtre 117 afin que celui-ci sélectionne la fréquence porteuse correspondant à celle qui a été allouée au téléphone 101 lorsqu'il s'est connecté à une station de base. Cette fréquence a été communiquée au téléphone 101 pendant une séquence de négociation qui s'est déroulée lors de la mise en service du téléphone 101, ou lors d'un rendez-vous temporel entre le téléphone 101 et une station de base. Cette séquence de négociation, ou ce rendez-vous temporel, sont bien connus de la norme GSM.

Une fois que le téléphone 101 est paramétré en mode GSM, des signaux sont reçus via l'antenne 102 et démodulés grâce au circuit 109 qui produit des signaux numériques qui sont alors lus par le microprocesseur 121 commandé par les codes instruction contenus dans une autre zone de la mémoire 122. Le microprocesseur 121 traite et transfère alors ces signaux numériques traités à un convertisseur numérique analogique 123. Le convertisseur Y123 est connecté à un haut-parleur 125. Les signaux numériques qui sont transmis au convertisseur 123 sont transformés en signaux analogiques qui sont diffusés acoustiquement par le haut-parleur 125. De même l'utilisateur parle dans un micro 126 produisant ainsi des signaux analogiques qui seront transmis à un convertisseur analogique numérique 124 qui produira des signaux numériques correspondant. Les éléments 121 à 123 sont connectés au bus 120. Le microprocesseur 121 lit alors les signaux numériques produits par le convertisseur 124 et fournit ces échantillons au circuit 105 qui peut alors produire des signaux GSM correspondant. Ces signaux GSM produits seront alors diffusés par l'antenne 102.

Dans un premier mode de fonctionnement, l'antenne 102 permet de recevoir des signaux selon les normes GSM, PCS et DCS, alors que l'antenne 114 permet de recevoir des signaux selon les normes UMTS. Dans ce mode, si le téléphone 101 fonctionne en mode DCS ou PCS, le microprocesseur 121 commande le sélecteur 113 pour que celui-ci établisse une liaison entre les ports S0 et S1. Le microprocesseur 121 commande aussi le filtre 117 afin que celui-ci sélectionne la bande de fréquence correspondante soit dans la bande PCS soit dans la bande DCS. Cette bande de fréquence est connue suite à une séquence de négociations déterminée par la norme PCS ou DCS. Le circuit 109 est alors en mesure de produire des signaux numériques démodulés à partir de signaux analogiques reçus via l'antenne 102. Ces signaux numériques pourront alors être diffusés via le haut-parleur 125. De même le circuit 111 sera en mesure de produire des signaux à la norme UMTS en fonction de signaux de voix qui auront été captés via le micro 126. Le fonctionnement des circuits 123 et 124 est identique quel que soit le mode de fonctionnement du téléphone 101.

Si le téléphone 101 fonctionne en mode UMTS, le microprocesseur 121 commande le sélecteur 113 pour que celui-ci établisse une liaison entre les ports S0 et S2. Le microprocesseur 121 commande aussi le filtre 117 afin de sélectionner la bande de fréquences correspondante dans la norme UMTS. Ces bandes de fréquence pour la norme UMTS se situent aux alentours de 2,1 GHtz. Lorsqu'il fonctionne en mode UMTS, les signaux reçus par le téléphone 101 le sont donc via l'antenne 114 et traités par l'amplificateur 116 et le filtre 117. Les signaux émis par le téléphone 101 sont donc diffusés par l'antenne 114 produits par les circuits 118 et amplifiés par l'amplificateur 119.

Le circuit 113 est réalisé soit à l'aide de transistors que l'on polarise à l'inverse l'un de l'autre pour qu'un seul d'entre eux soit passant à un instant donné, soit à l'aide de diodes elles aussi polarisées à l'inverse l'une de l'autre pour qu'une seule d'entre elles soit passante. Si on réalise le sélecteur 113 à l'aide de transistors, il suffit de les commander par leurs grilles avec un même signal de commande sachant que l'un de ces signaux de commande est inversé par rapport à l'autre. Cette inversion s'obtient par exemple par une porte NOT. Ainsi les deux transistors ne sont jamais passants en même temps et une seule des connexions S0-S1 ou S0-S2 est établie à l'instant donné.

Dans ce premier mode de fonctionnement la première antenne 102 a une bande passante de 880 MHz à 1990 MHz correspondant aux normes GSM, DCS et PCS. La deuxième antenne 114 a une bande passante de 1900 MHz à 2170 MHz correspondant aux normes UMTS.

Dans un deuxième mode de fonctionnement du dispositif à deux antennes précédemment décrit, la première antenne 102 permet de gérer des signaux selon les normes GSM, PCS, DCS, et UMTS TDD (division temporelle de canaux) en réception. Cela car les signaux TDMA (accès multiple par division temporelle) des normes GSM standards sont proches des signaux émis dans la norme UMTS TDD. La deuxième antenne 114 permet de gérer des signaux selon les normes UMTS FDD (division fréquentielle des canaux) et UMTS TDD en émission. Cela car les signaux émis dans la norme UMTS TDD sont proches de ceux émis dans la norme UMTS FDD. Le microprocesseur 121 commande donc le sélecteur 113 en fonction de la nature des signaux. La différence avec le premier mode de fonctionnement est que les signaux UMTS TDD reçus sont traités avec le sélecteur 113 établissant une liaison entre ses ports s1 et s0.

Dans ce deuxième mode de fonctionnement la première antenne 102 a une bande passante de 880 MHz à 2025 MHz correspondant aux normes GSM, DCS, PCS et UMTS TDD. La deuxième antenne 114 a une bande passante de 1900 MHz à 2170 MHz correspondant aux normes UMTS.

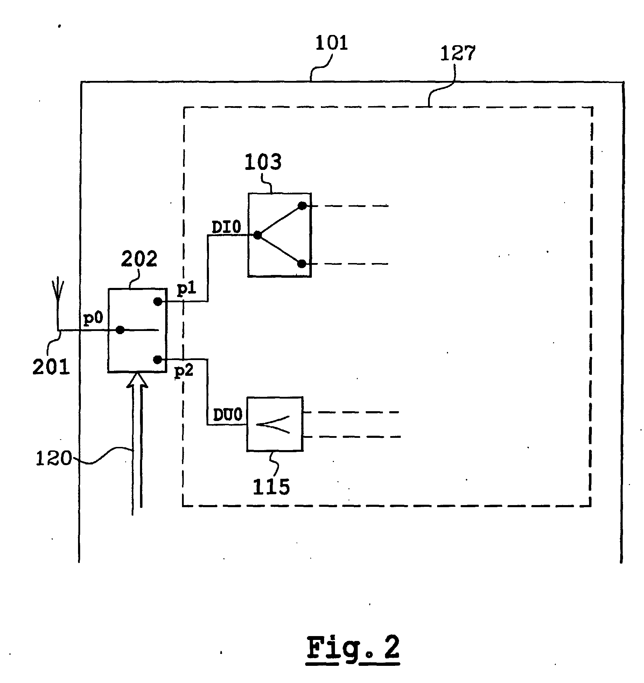

La figure 2 montre une variante de l'invention. Pour la figure 2 les éléments identiques à ceux de la figure 1 sont repris avec les mêmes références. La figure 2 montre que le téléphone 101 comporte une antenne 201 connectée à un premier port p0 d'un sélecteur 202. Le sélecteur 202 permet d'établir une connexion soit entre le port p0 et un port p1 du sélecteur 202, soit entre le port p0 et un port p2 du sélecteur 202. Le port p1 est d'autre part connecté à l'entrée di0 du dispositif 127 d'émission réception du téléphone 101. Le port p2 est d'autre part connecté au port du0 du dispositif 127.

Le sélecteur 202 est aussi connecté au bus 120 ce qui permet au microprocesseur 121 de commandé le sélecteur 120 et ainsi d'aiguiller les signaux reçus par l'antenne 201 selon le mode de fonctionnement du téléphone 101.

Ainsi, dans un premier mode de fonctionnement, le sélecteur 202 établi une liaison entre les ports p0 et p1 lorsque le téléphone 101 fonctionne selon l'une des normes GSM, DCS, ou PCS. Le sélecteur 202 établi une connexion entre les ports p0 et p2 lorsque le téléphone 101 fonctionne selon l'une des normes UMTS.

Dans un deuxième mode de fonctionnement, le sélecteur 202 établie une liaison entre les ports p0 et p1 lorsque le téléphone 101 fonctionne selon l'une des normes GSM, DCS, PCS, ou UMTS TDD en réception. Le sélecteur 202 établie une connexion entre les ports p0 et p2 lorsque le téléphone 101 fonctionne selon l'une des normes UMTS FDD ou UMTS TDD en émission.

Ces commutations du sélecteur 202 sont commandées par le microprocesseur 121.

## Revendications

1. Appareil (101) comportant un dispositif (102-119) d'émission réception de signaux radioélectriques fonctionnant selon plusieurs normes dans lequel le dispositif d'émission réception comporte :
- plusieurs entrées (DI0, DU0), chacune correspondant à certaines normes,
- une première chaîne (107, 108) de réception pour traiter des signaux reçus, via une première entrée (DI0), dans une gamme de fréquences correspondant à des signaux selon des premières normes,
- une deuxième chaîne (116, 117) de réception pour traiter des signaux reçus, via la première et une deuxième entrée (DU0), dans une gamme de fréquences correspondant à des signaux selon des deuxièmes normes,
- un sélecteur (113) pour sélectionner, parmi des signaux reçus par les première et deuxième entrées, les signaux traités par la deuxième chaîne de réception.

2. Appareil selon la revendication 1, **caractérisé en ce que** la première chaîne réception comporte un amplificateur (108) faible bruit.

3. Appareil selon l'une des revendications 1 ou 2, **caractérisé en ce que** la deuxième chaîne de réception comporte un filtre (117) sélecteur de bande à fréquence de sélection variable.

4. Appareil selon l'une des revendications 1 à 3, **caractérisé en ce que** la première chaîne traite des signaux selon la norme GSM, la deuxième chaîne traite des signaux selon les normes PCS, DCS et UMTS.

5. Appareil selon la revendication 4, **caractérisé en ce que** la deuxième chaîne comporte un sélecteur (113) pour sélectionner parmi les signaux DCS PCS, et le signaux UMTS ceux qui sont traités.

6. Appareil selon l'une de revendications 1 à 5, **caractérisé en ce que** le dispositif d'émission réception comporte :
- une première entrée sous forme d'un port DI0 d'un diplexeur (103) ayant deux autres ports DI1, et DI2 connecté au port DI0,
- une première chaîne de réception GSM dont l'entrée est connectée au port DI1 du diplexeur,
- une première sortie d'une chaîne de production de signaux GSM connectée sur le port DI1 du diplexeur,
- une deuxième chaîne de réception DCS PCS dont l'entrée est connectée au port DI2 du diplexeur,
- une deuxième sortie d'une chaîne de production de signaux DCS PCS connectée sur le port DI2 du diplexeur,
- une deuxième entrée sous forme d'un port DU0 d'un duplexeur (115) ayant deux autres ports DU1 et DU2 connecté au port DU0
- une connexion entre le port DU1 du duplexeur et la deuxième chaîne de réception,
- une troisième sortie d'une chaîne de production de signaux UMTS connectée sur le port DU2 du duplexeur.

7. Appareil selon la revendication 6, **caractérisé en ce que** la deuxième chaîne de réception comporte en série une adaptation (112) d'impédance, un sélecteur (113), un amplificateur (116) et un filtre (117) sélecteur à fréquence de sélection variable, le sélecteur ayant trois ports, un port S0 connecté à l'adaptation, un port S1 connecté à une entrée de l'amplificateur, un port S2 connecté au port DU1 du duplexeur, le sélecteur permet d'établir une connexion soit entre S0 et S1, soit entre S0 et S2.

8. Appareil selon l'une des revendications 1 à 7, **caractérisé en ce que** des chaînes de réception sont protégées, de préférence en adaptant leur impédance, pour que leur fonctionnement ne soit pas perturbé par des signaux produits par l'appareil.

9. Appareil selon l'une des revendications 1 à 8, **caractérisé en ce que** des chaînes de production de signaux sont protégées, de préférence par des diodes, pour que leur fonctionnement ne soit pas perturbé par des signaux reçus par l'appareil via une antenne.

10. Appareil selon l'une des revendications 1 à 9, **caractérisé en ce que** chaque entrée du dispositif d'émission réception est connectée à une antenne.

11. Appareil selon l'une des revendications 1 à 9, **caractérisé en ce que** deux entrées du dispositif d'émission réception sont connectées à une seule antenne via un sélecteur.

12. Appareil selon l'une des revendications 1 à 11, **caractérisé en ce que** l'appareil est un téléphone mobile.

## Patentansprüche

1. Gerät (101) mit einer Vorrichtung (102 - 119) zum Senden und Empfangen von Funksignalen gemäß mehreren Normen, wobei das Sendeempfangsgerät umfasst:
mehrere Eingänge (DI0, DU0), von denen jeder bestimmten Normen entspricht,
eine erste Empfängervorrichtung (107, 108) zum Verarbeiten von empfangenen Signalen, die über einen ersten Eingang (DIO) ankommen und in einem Frequenzbereich liegen, der Signalen gemäß ersten Normen entspricht,
eine zweite Empfängervorrichtung (116, 117) zum Verarbeiten von Signalen, die über den ersten Eingang und einen zweiten Eingang (DU0) in einem Frequenzbereich empfangen wurden, der Signalen gemäß zweiten Normen entspricht,
einen Auswahlschalter (113) zum Auswählen derjenigen Signale unter den über den ersten und zweiten Eingang empfangenen Signalen, die durch die zweite Empfängervorrichtung verarbeitet wurden.

2. Gerät nach Anspruch 1, **dadurch gekennzeichnet, dass** die erste Empfängervorrichtung einen Verstärker (108) mit niedrigem Rauschpegel umfasst.

3. Gerät nach Anspruch 1 oder 2, **dadurch gekennzeichnet, dass** die zweite Empfängervorrichtung ein variables Auswahlfilter (117) zum Auswählen des Frequenzbandes umfasst.

4. Gerät nach einem der Ansprüche 1 bis 3, **dadurch gekennzeichnet, dass** die erste Vorrichtung die Signale gemäß der GSM-Norm verarbeitet, die zweite Vorrichtung die Signale gemäß den Normen PCS, DCS und UMTS verarbeitet.

5. Gerät nach Anspruch 4, **dadurch gekennzeichnet, dass** die zweite Vorrichtung einen Auswahlschalter (113) zum Auswählen derjenigen Signale unter den DCS- und PCS- Signalen und den UMTS- Signalen umfasst, die verarbeitet worden sind.

6. Gerät nach einem der Ansprüche 1 bis 5, **dadurch gekennzeichnet, dass** die Sendeempfangsvorrichtung umfasst:
einen ersten Eingang in Form eines Ports DI0 eines Duplexers (103) mit zwei weiteren Ports DI1 und DI2, die mit dem Port DI0 verbunden sind,
eine erste GSM-Empfängervorrichtung, deren Eingang mit dem Port DI1 des Duplexers verbunden ist,
einen ersten Ausgang einer GSM-Signalerzeugungsvorrichtung, verbunden mit dem Port DI1 des Duplexers,
eine zweite DCS/PCS-Empfängervorrichtung, deren Eingang mit dem Port DI2 des Duplexers verbunden ist,
einen zweiten Ausgang einer DCS/PCS-Signalerzeugungsvorrichtung, verbunden mit dem Port DI2 des Duplexers,
einen zweiten Eingang in Form eines Ports DU0 eines Duplexers (115) mit zwei weiteren Ports DU1 und DU2, verbunden mit Port DU0,
eine Verbindung zwischen dem Port DU1 des Duplexers und der zweiten Empfängervorrichtung,
einen dritten Ausgang einer UMTS-Signalerzeugungsvorrichtung, verbunden mit dem Port DU2 des Duplexers.

7. Gerät nach Anspruch 6, **dadurch gekennzeichnet, dass** die zweite Empfängervorrichtung in Reihe eine Impedanzanpassung (112), einen Auswahlschalter (113), einen Verstärker (116) und ein variables Auswahlfilter (117) für die Frequenz umfasst, wobei der Auswahlschalter drei, nämlich einen Port S0, verbunden mit der Anpassung, einen Port S1, verbunden mit einem Verstärkereingang, einen Port S2, verbunden mit dem Port DU1 des Duplexers, umfasst, wobei der Auswahlschalter eine Verbindung entweder zwischen S0 und S1 oder zwischen S0 und S2 herstellen kann.

8. Gerät nach einem der Ansprüche 1 bis 7, **dadurch gekennzeichnet, dass** die Empfängervorrichtungen geschützt sind, vorzugsweise durch Anpassen ihrer Impedanz, damit ihre Funktion nicht durch von dem Gerät erzeugte Signale gestört wird.

9. Gerät nach einem der Ansprüche 1 bis 8, **dadurch gekennzeichnet, dass** die Signalerzeugungsvorrichtungen geschützt sind, vorzugsweise durch Dioden, damit ihre Funktion nicht durch von dem Gerät über eine Antenne empfangene Signale gestört wird.

10. Gerät nach einem der Ansprüche 1 bis 9, **dadurch gekennzeichnet, dass** jeder Eingang der Sendeempfangsvorrichtung mit einer Antenne verbunden ist.

11. Gerät nach einem der Ansprüche 1 bis 9, **dadurch gekennzeichnet, dass** zwei Eingänge der Sendeempfangsvorrichtung über einen Auswahlschalter mit einer einzigen Antenne verbunden sind.

12. Gerät nach einem der Ansprüche 1 bis 11, **dadurch gekennzeichnet, dass** das Gerät ein Mobiltelefon ist.

## Claims

1. Apparatus (101) including a device (102-119) for transmission-reception of radio-electric signals operating in accordance with a plurality of standards, in which the device for transmission-reception includes:
- a plurality of inputs (DI0 DU0), each corresponding to certain standards,
- a first reception chain (107, 108) to process signals received, via a first input (DI0), within a range of frequencies corresponding to signals in accordance with first standards,
- a second reception chain (116, 117) to process signals received, via the first and a second input (DU0), in a range of frequencies corresponding to signals in accordance with second standards
- a selector (113) for selecting, from the signals received by the first and second inputs, the signals processed by the second reception chain.

2. Apparatus as described in claim 1, ***characterised by** the fact that* the first reception chain includes a low noise amplifier (108).

3. Apparatus as described in one of claims 1 or 2, ***characterised by** the fact that* the second reception chain includes a band selection filter (117) of variable selection frequency.

4. Apparatus as described in one of claims 1 to 3, ***characterised by** the fact that* the first chain processes signals in accordance with the GSM standard, and the second chain processes signals in accordance with the PCS, DCS and UMTS standards.

5. Apparatus as described in claim 4, ***characterised by** the fact that* the second chain includes a selector (113) for selecting those that are processed from the DCS PCS signals and the UMTS signals.

6. Apparatus as described in one of claims 1 to 5, ***characterised by** the fact that* the transmission-reception device includes:
- a first input in the form of a port DI0 of a diplexor (103) having two other ports DI1 and DI2 connected to the port DI0,
- a first GSM reception chain the input of which is connected to the port DI1 of the diplexor,
- a first output of a chain for production of GSM signals connected to the port DI1 of the diplexor,
- a second DCS PCS reception chain the input of which is connected to the port DI2 of the diplexor,
- a second output of a chain for production of DCS PCS signals connected to the port DI2 of the diplexor,
- a second input in the form of a port DU0 of a duplexor (115) having two other ports DU1 and DU2 connected to the port DU0,
- a connection between the port DU1 of the duplexor and the second reception chain,
- a third output of a chain for production of UMTS signals connected to the port DU2 of the duplexor.

7. Apparatus as described in claim 6, ***characterised by** the fact that* the second reception chain includes in series an impedance matching device (112), a selector (113), an amplifier (116) and a selection filter (117) with variable selection frequency, the selector having three ports, a port S0 connected to the matching device, a port S1 connected to an input of the amplifier and a port S2 connected to the port DU1 of the duplexor, the selector allows establishment of a connection either between S0 and S1, or between S0 and S2.

8. Apparatus as described in one of claims 1 to 7, ***characterised by** the fact that* reception chains are protected, preferably by matching their impedance, so that their operation is not interfered with by signals produced by the apparatus.

9. Apparatus as described in one of claims 1 to 8, ***characterised by** the fact that* signal production chains are protected, preferably by diodes, so that their operation is not interfered with by signals received by the apparatus via an antenna.

10. Apparatus as described in one of claims 1 to 9, ***characterised by** the fact that* each input of the transmission-reception device is connected to an antenna.

11. Apparatus as described in one of claims 1 to 9, ***characterised by** the fact that* two inputs of the transmission-reception device are connected to a single antenna via a selector.

12. Apparatus as described in one of claims 1 to 11, ***characterised by** the fact that* the apparatus is a mobile telephone.
